Europäisches Patentamt

European Patent Office

Office européen des brevets

(11) Publication number: **0 262 540 B1**

# EUROPEAN PATENT SPECIFICATION

(45) Date of publication of patent specification: **10.04.91**   (51) Int. Cl.⁵: **B29D 23/22**, B29C 53/62, //B29K67:00

(21) Application number: **87113755.0**

(22) Date of filing: **21.09.87**

(54) Method for producing glass fibre-reinforced polyester tubes, including structural tubes.

(30) Priority: **01.10.86 IT 2186686**

(43) Date of publication of application:
**06.04.88 Bulletin 88/14**

(45) Publication of the grant of the patent:
**10.04.91 Bulletin 91/15**

(84) Designated Contracting States:
**AT BE CH DE ES FR GB GR IT LI LU NL SE**

(56) References cited:
**US-A- 3 736 086**
**US-A- 3 971 336**
**US-A- 4 071 389**
**US-A- 4 233 020**
**US-A- 4 251 036**

(73) Proprietor: **Piccioli, Dino**
**"Peccio Martino"**
**I-06060 Pietrafitta (PG)(IT)**

(72) Inventor: **Piccioli, Dino**
**"Peccio Martino"**
**I-06060 Pietrafitta (PG)(IT)**

(74) Representative: **Gervasi, Gemma, Dr.**
**NOTARBARTOLO & GERVASI Srl 33, Viale Bianca Maria**
**I-20122 Milano(IT)**

EP 0 262 540 B1

## Description

This invention relates to a plant for producing glass-fibre reinforced polyester (G.R.P.) tubes including structural tubes in any location, and the method for producing said tubes.

More particularly, the invention relates to a plant as specified heretofore which is suitable for production on a building site, and which can be abandoned or sold locally on conclusion of the contract, or possibly dismantled, transported and reassembled wherever new work is to be carried out.

Said tubes are suitable for use in numerous fields, including sewers, irrigation, conveying of pressurised fluids, natural gas pipelines, remote heating, and the chemical industry, or can form complete residential modules with particular combinations for the construction of hotels, motels, work and military camps or social buildings, or can form complete insulated vessels for rail and road tankers for the transportation of liquids, solids, granules etc, or can form large-dimension silos or tanks which can be insulated and of structural type.

Said tubes can be produced in a wide range of diameters. For example tubes can be produced of small diameter from 150 to 300 mm, medium diameter from 400 to 1000 mm, and large diameter from 1000 to 4000 mm and beyond.

Certain methods for the production of G.R.P. tubes are known in the art.

For example, G.R.P. tubes are produced by a method based on the winding of glass fibre filaments, which are passed through a resin bath and are then wound on a rotating mandrel. The continuous filaments are distributed by a carriage driven with to-and-fro motion of determined extent. The filament band does not cover the entire space after the first pass, and therefore a number of passes are necessary to obtain the required characteristics.

In addition, considerable difficulties are encountered in forming the socket, the initial part and the flange simultaneously with the tube, and therefore rather complicated work is required to finish the the initial parts and prepare the joints.

Another known method consists of the centrifuge-depositing of successive layers of resin and cut glass fibres, which may incorporate sand and resin fillers, a final appropriate resin layer being used to form the internal tube layer.

These tubes have the same drawbacks as the tubes obtained by the first described method, and in addition not only do they have rather poor mechanical characteristics but fixed high-cost plants are required for this type of production.

A further method comprises the following operational stages: forming a protective resin layer on a mandrel and polymerising this in an oven which circumferentially surrounds the mandrel, then applying successive small glass fibre layers, possibly incorporating a sand filler and with continuous filament winding, until the required thickness is reached, and following this by polymerisation in the oven circumferentially surrounding the mandrel.

The process and apparatus disclosed by US-A-4.071.389, upon which the preambles of claims 1 and 2 are based, represent improvements in the nozzle device for controlled applying of the liquid resin and in the device for applying reinforcing materials (chopped reinforcing fibers and continuous filaments).

This method also has the drawback of the impossibility of forming sockets, thickened portions and flanges during its implementation, it also requires considerable plant investment.

We have now found that by using a new plant of modest investment, which can be installed on a building site and then if necessary abandoned on conclusion of the contract, it is possible to produce G.R.P. tubes in a manner which obviates the drawbacks encountered when operating in accordance with the known art.

In particular, with said plant and the relative method according to the present invention, it is possible by means of a single program:

- to form thickened initial portions and any grooves for the O-ring seals;
- to form the flanges and socket and incorporate elasto mers therein during this formation to provide pressure sealing;
- to form all reinforcements of the required dimensions and in the required positions as integral components of the tube;
- to produce double-walled tubes with expanded material between the walls and, if necessary, with suitably calculated stiffening ribs connecting the walls together.

The plant according to the present invention comprises a production zone, a post-polymerisation zone and a finishing zone which are arranged as a compact structure, and is characterised in that said production zone comprises one or more mandrels of collapsible type, an apparatus for winding-on a release agent, an apparatus driven with to-and-fro motion for spraying an internal protective layer, an apparatus driven with to-and-fro motion for spraying resin together with cut glass fibres and for winding continuous circumferential glass filaments, and an apparatus for spraying expanded material and for its smoothing if a structural tube is required; said post-polymerisation zone, heated to a temperature suitable for accelerating total polymerisation, comprises inclined roller tables for conveying the tubes extracted from said mandrels to the finishing zone; and said finishing zone comprises a machine for machining at the O-ring seals and at the sockets, and for milling, shaping and cutting the tubes to their exact size in a single operation.

The method according to the invention is characterised by comprising the following operations:

- winding a release agent onto the mandrel;
- coating it with a chemically resistant product;
- depositing successive layers of resin and of cut glass fibres together with resin, including programmed reinforcements at each layer, and with simultaneous superposing of a layer of continuous circumferential glass fibre filaments;
- depositing expanded material;
- smoothing said expanded material and depositing an external layer of resin and glass fibres if structural tubes are to be produced;
- post-polymerisation of the resin;
- mechanical finishing of the tube.

These and further characteristics and advantages of the plant and method according to the present invention will be more apparent from the detailed description given hereinafter with reference to the figures which show preferred embodiments of the invention and are given by way of non-limiting example.

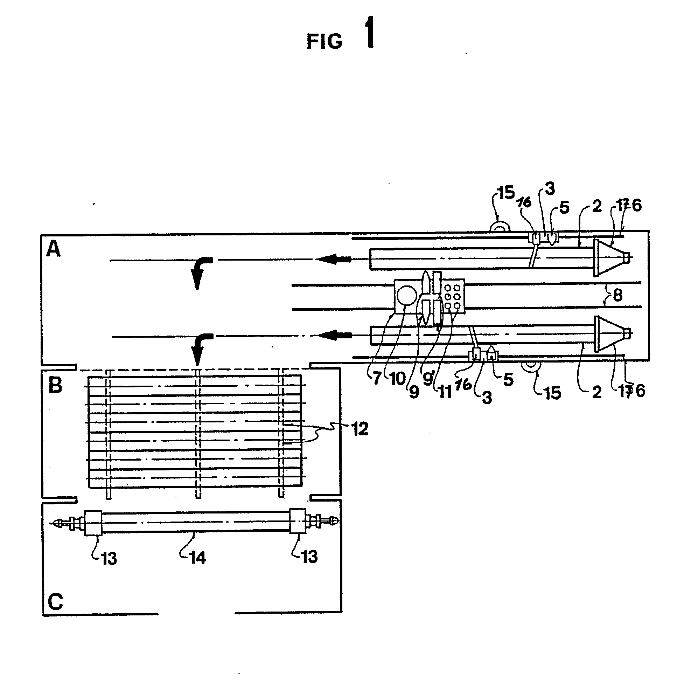

Referring to the reference letters and numerals of Figure 1, A indicates the production zone, B the post-polymerisation zone and C the finishing zone.

In one embodiment of the invention, said production zone A measures 17 x 3.5 x 2.5 m and consists of a possibly demountable but rigid platform with walls and cover of sandwich laminate and transportable on a long vehicle. The weight of this structure, complete with its normal apparatus ready for production, is less than 10 metric tons.

The following are fixed on said platform:

- two drive units connected to the speed regulator units 17 to generate the motion of the collapsible mandrels 2 which rotate at a peripheral speed calculated according to the diameter and thickness of the tube to be produced;
- two carriages 3 carrying the apparatus 16 for winding the release agent and the apparatus 5 for spraying the internal protective layer. The carriages 3 are positioned to the side of the mandrels 2, and the relative to-and-fro motion is generated by speed regulator units which are governed by the process production program. The carriages move along suitable tracks 6;
- a carriage 7, also governed by the production program, and moving along the track 8 with a to-and-fro movement and with timer-controlled stoppages. The following are positioned on this carriage: the sprayer 9 for the resin with cut glass fibres, the apparatus 9' for circumferentially winding the continuous glass filaments, the resin tank 10 and boxes 11 containing the continuous glass filaments.

In zone A there are also installed two air conditioners 15, the purpose of which is to remove any residual vapours from the monomer compound.

The post-polymerisation zone B is in the form of a container formed from insulated panels. In a preferred embodiment it measures 8.5 x 2.5 x 2.5 m.

The roller tables 12 are arranged in its interior in a suitably inclined manner for sliding the tubes extracted from the mandrels 2 towards the finishing zone C.

The finishing zone C is also in the form of a container and has the same dimensions as the preceding, in it there being installed the machine on which the tubes 14 originating from B are fitted within its two ends.

The machine 13 is provided with a diamond-clad milling apparatus and under mechanical control machines the tubes in the region corresponding to the O-rings, and also mills, cuts and finishes the tubes in a single operation. The described plant can be installed in a single working day, and requires only two people for its operation.

The described embodiment comprises two mandrels 2, but it is apparent that a different number of said mandrels can be used according to the required production capacity.

The method for producing G.R.P. tubes by said plant is implemented in the following stages.

Firstly the release agent is applied to the mandrels 2, after which a chemically resistant coating consisting preferably of a suitably formulated resin of polyester, vinyl or similar type, is applied by spraying.

After this, resin together with cut glass fibres is sprayed on by means of the sprayer 9, and continuous glass filaments are simultaneously wound cicumferentially by means of 9' so as to form a continuous layer of glass filaments which completely covers the base layer formed by the resin and cut glass fibres.

A typical composite consists of a lower layer of 0.8 mm of resin with cut glass fibres and an upper layer of 0.2 mm of continuous glass fibre filaments which completely cover the lower layer.

The required tube wall is formed by means of two or more passes, the thicknesses and component ratios of which can be considerably varied and are programmable. The requires result is obtained by regulating the rotation speed of the mandrel 2, the speed of the carriage 7, the resin/cut glass fibre ratio and the number of circumferential filaments.

The following are formed with the aid of programmed stoppages of the carriage 7: the initial thickened part of the tube, the base with its required reinforcements, and the final part which can be of socket or flanged form. During this formation, the resin and glass fibre sprayer obviously remains in operation.

Thus the reinforcements are formed without any deviation from the resin deposition and glass filament winding machine program, but simply by halting the carriage 7 for the programmed time. The multi-layered construction enables a final composite to be obtained which withstands bending, tensile and shear stresses in the best possible manner, because of the programmed deposition. In this respect, the continuous filaments act unidirectionally, whereas the resin and cut glass fibre layer, restrained by the continuous filaments, remains in an optimum working position.

The tubes produced in zone A are then transferred to the post-polymerisation zone B, which is heated to a temperature of between 50 and 60° C, in order to complete the hardening of the glass and resin composite. Finally, the mechanical finishing operations are carried out on the tubes in zone C.

With regard to the joints in particular, the machining is carried out by milling in a single operation with the cutting and finishing, the milling unit forming an integral part of the tube mechanical finishing apparatus. A polyurethane sprayer and miller can be added to the described plant to allow production of sandwich and structural tubes.

For large-diameter structural tubes, which can be used for the most diverse applications and can also comprise expanded material and reinforcements, the dimensions of the production zone are governed by the tube length and diameter. For these tubes, the post-polymerisation is implemented directly on the mandrel.

One particular embodiment of the invention also includes the formation of a flanged joint of new design, and which can be constructed simultaneously with the tube production process and thus without any cost increase. Said joint can be designed individually for each type of tube, whether supporting pressure or not, in that the required dimensions are obtained by the diamond-clad milling apparatus included in the finishing machine. This is unique in that it does not form part of any other production process for steel or thermosetting plastic tubes.

In this respect, the various types of joints used in the known art require considerable additional machining, involving the formation of lathed double joints with sockets which require the insertion of elastomer gaskets, or the welding of flanges which have to be prepared separately and then welded to the tube body.

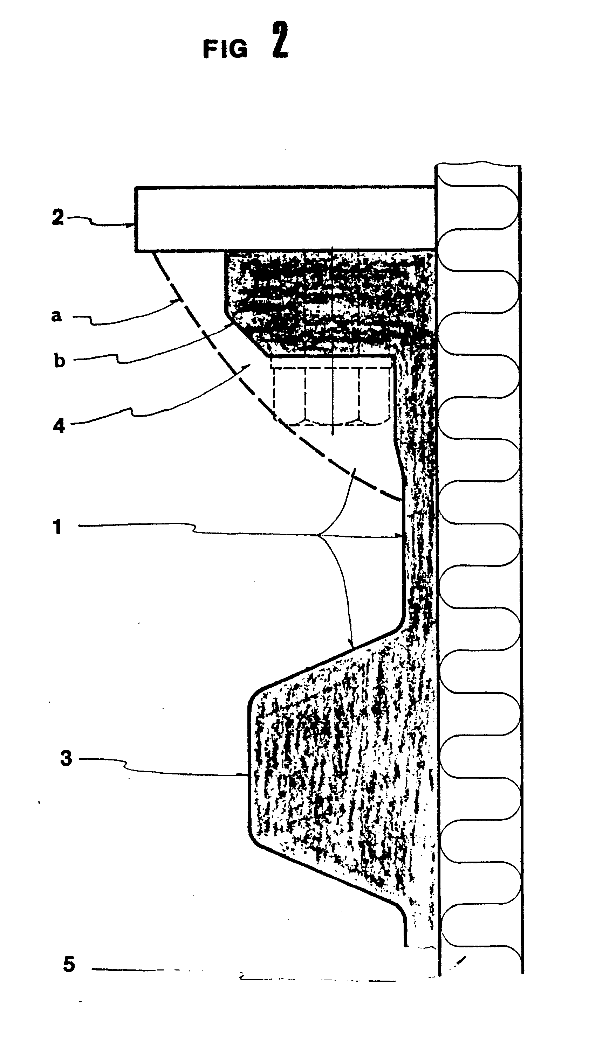

One embodiment of a flanged joint according to the invention is shown in Figure 2, in which the reference numeral 1 indicates the tube body with ribbing (but the same method can be applied to tubes of different structure) and bounded at its ends by two rings 2 of elastomer or other material, these being positioned with their inner faces already finished and carrying markings for the centres and diameters of the holes to be formed. The reference numeral 3 indicates any ribbing close to the flange, and 4 indicates the thickened portion which is formed in the same manner as the reinforcement ribbing. Using normal milling cutters suitably prepared in sectors, the required profile of the flange joint is formed by machining for example from the profile (a) of the semifinished flange to the final flange profile (b). This flange is constructed in the finishing zone in the case of small or medium-small tubes, and on the production mandrel in the case of large cylindrical bodies. By collapsing the mandrel 5 and extracting the end elastomer piece, the tube can be removed from the mandrel, the tube then lacking only the connection holes, the positions of which have already been marked as stated heretofore, these being formed simultaneously by means of a normal jig and drills.

In a preferred embodiment, the production zone, which is very versatile, consists of a prefabricated platform with relative side and cover panels, and can be transported on a lorry and mounted on any ground, it supporting all the machines and equipment, the electrical and compressed air connections and the resin containers. It has a width of 7 m and a length of 28 m and can be enlarged as required. This prefabricated structure is connected to four double drive units able to operate eight interchangeable mandrels for producing tubes from 160 to 1500 mm diameter, and comprises a central track with a carriage for applying the release agent and protective layer, and two side tracks with relative carriages for the simultaneous production of four tubes of equal or different diameters and characteristics.

The production capacity of this plant, using two shifts of 9 hours each, can attain for example 600 m of 300 mm diameter PN10 tube, 280 m of 600 mm diameter PN10 tube or 160 mm of 1000 mm diameter tube for sewers, these tubes being completely finished, or alternatively 40 2 m diameter sumps or 30 tanks of 1500 mm diameter and 3 m length.

For tubes up to 600 mm diameter, the process is completed by means of the post-polymerisation and fishing stages, whereas for tubes of greater diameter the process is completed on the mandrel.

With this plant, by suitably raising the walls of the production zone and changing only the mandrel, structural insulated rail or road tanker vessels for transp orting liquids or solids can be formed with a diameter of 2500 mm and a length of 12,5 m, complete with ends and support seats, as can structural insulated silos and vertical and horizontal tanks for the most diverse uses, or alternatively 48 m of tube of the same diameter, including pressure tube, with O-ring or flanged joints, and weighing about 260 kg/linear metre.

Again with the same plant and changing only the mandrel, and again with two-shift operation, four structural insulated residential units of 3.3 m diameter and 12 m length can be formed for the in-situ construction of motels, hotels, single or multi-family developments etc., with the most diverse combinations. Thus by lengthening the prefabricated structure of the production zone, optimisation is attained and the plant is made versatile for any production diversification.

As is apparent from the aforegoing description, the plant according to the invention is a high-productivity plant with limited labour requirement, and can form for a local contractor a considerable fixed production point for the local supply of the most diverse components required by the market.

Compared with the known art, the plant and method according to the invention have considerable economical and technical advantages. In this respect, in addition to material, time and space saving, the following are obtained:

- tubes which are perfectly homogeneous for joining purposes
- tubes which are perfectly finished on the flange faces
- tubes properly designed for connection together to make up any type of pipeline and for any project requirement.

In addition:

- using a single program, thickened portions can be formed at the initial part and at the O-ring seals for the joints, and flanged and socket joints can be formed with a lip-shaped elastomer gasket for high pressure work
- all reinforcements of the required dimensions can be formed in the required positions layer for layer as integral parts of the tube
- using two mandrels, a practically continuous operating cycle can be attained.

Finally:

- the tubes can be doubled, tripled or made of any length by simply welding two or more pieces tcgether by polymerisation
- the tubes can be connected by a very simple connection to all types of sumps (branch, connection, step type etc.) without any discontinuity, and large diameter tubes can be connected to semicylindrical bodies (tanks, rail tankers, silos and other structural insulated items) by applying a thin layer of glass fibre preimpregnated with polyester resin at a calculated polymerisation temperature, then fitting the necessary nuts and bolts and finishing by using glass fibre impregnated with resin to fill the empty space between the flange and the closest rib, which can be positioned in the most suitable point for facilitating this operation.

Considering the simplicity of the plant and its low cost, the plant can be sold or abandoned in situ on conclusion of the contract.

**Claims**

1. A glass fibre-reinforced polyester tube consisting of one or more layers of resin and cut glass fibres and optionally of one or more layers of continuous glass fibre filaments, provided with a flanged joint (4) at one or both ends, and characterized in that the or each annular flanged joint (4) is an integral part of the body (1) of the tube, which flanged joint (4) consists of the same resin and reinforcing materials as those of the tube body (1).

2. Method for obtaining the tube of claim 1 which comprises winding a release agent on a collapsible rotatory mandrel (5), depositing successive layers of resin and cut glass fibres, optionally also of continuous circumferential glass fibre filaments and characterized in that at least one end part of the tube is shaped in form of a flanged joint (4), by applying in the end zone(s) of the mandrel a suitable amount of resin and reinforcing material, the fluid mass of resin and reinforcing material being delimited axially on the external side of the tube by an auxiliary ring (2) which is removed after the subsequent polymerization of the resin.

3. Method according to claim 2 wherein the flange element is provided with connection holes by a drilling operation.

**Revendications**

1. Tuyau en polyester renforcé par de fibre de verre, consistant d'une ou plusieures couches de résine et de fibres de verre coupées et eventuellment d'une où plusieures couches de filaments continus en fibre de verre, muni d'une jonction à bride (4) à une ou aux deux extrémitèes, caracterisé en ce que la ou chaque jonction anulaire (4) est une partie intégrale du corps (1) du tuyau, la jonction à bride consistant de la même resine et les mêmes materiaux renforçants du corps du tuyau.

2. Procédé pour obtenir le tuyau de la revendication 1, lequel comprend l'enroulement d'un agent de relâche sur un mandrin rotant collapsable (5), la déposition des couches successives de résine et de fibres de verre coupées, eventuéllement aussi de filaments circonférentielles en verre, et caractérisé en ce que au moins une extrémité du tube est formée comme une jonction à bride (4) en appliant à la partie ou parties terminale(s) du mandrin une quantité convenable de résine et de matériel reinforçant, la masse fluide de la résine et du matériel renforçant étant delimitées axialement sur le côté extérieur du tuyau par un anneau auxiliaire (2) lequel est ôté après la successive polymrisation de la résine.

3. Procédé selon la revendication 2 dans lequel l'élément à bride est muni de troux de jonction par une opération de forage.

## Ansprüche

1. Glasfaserverstärktes Polyester-rohr bestehend aus einem oder mehreren Harz- und geschnitteten Glassfaser-Schichten und eventuell aus einem oder mehren kontinuierlichen Glassfaden Schichten, ausgestattet mit einer Flantschverbindung (4) bei einem-oder beiden Enden, und dadurch gekennzeichnet, dass eine oder beide ringflantschteten Verbindungen ist/sind integrales Teil des Rohrkörpers (1) die Flantschverbindung besthend aus demselben Harz und Stoff des Rohrkörpers.

2. Verfahren zur Herstellung des Rohres gemäss Anspruch 1, welches die Windung eines Auslösemittels auf einem zusammenlegbaren, rotierenden Spindel (5) und die Auflegung von mehreren Harz- und geschnitteten Glassfaserschichten, eventuell auch von kontinuierlichen umschliessenden Glassfaden, umfässt, dadurch gekennzeichnet, dass mindestens ein Endteil des Rohres als eine Flantschverbindung verformt wird durch Anliegen auf dem Endteil-oder -teilen des Spindels einer angemessenen Harz- und Verstärkungsmittel Menge, und dass die fliessende Harz- und Verstärkungsmittel- Masse durch einen Hilfsring auf die Aussenseite des Rohres axial abgegrenzt werden, welcher Ring nach der darauffolgenden Harzpolymerisation entfernt wird.

3. Verfahren gemäss Anspruch 2, in welchem die Flantsch durch ein Durchbohrungsvorgang mit Verbindungslöchern versehen wird.

FIG 1

## FIG 2